# EUROPEAN PATENT SPECIFICATION

(11) **EP 3 863 197 B1**
(45) Date of publication and mention of the grant of the patent: **08.10.2025**
(21) Application number: 20155725.3
(22) Date of filing: 05.02.2020
(51) Int. Cl.: H04B 10/50, H04B 10/572

(54) **WAVELENGTH DRIFT REDUCTION BY INTELLIGENT BURST SCHEDULING**
WELLENLÄNGENDRIFTVERRINGERUNG DURCH INTELLIGENTE BURST-PLANUNG
RÉDUCTION DE DÉRIVE DE LONGUEUR D'ONDE PAR PROGRAMMATION DE RAFALE INTELLIGENTE

(43) Date of publication of application: 11.08.2021
(73) Proprietor: Nokia Solutions and Networks Oy, 02610 Espoo (FI)
(72) Inventor: Borkowski, Robert, 70435 Stuttgart (DE); Bonk, René, 70435 Stuttgart (DE)
(74) Representative: IP HILLS NV

(56) References cited:
- EP-A1- 1 679 932
- US-A1- 2019 238 235

## Description

### Technical Field

Various example embodiments relate to communication technology, in particular to wavelength drift of optical transmitter during burst data transmission in an optical communication network.

### Background

Time- and Wavelength-Division Multiplexed Passive Optical Network, also referred to as TWDM-PON, is based on two multiplexing aspects: time-domain multiplexing of optical bursts from multiple transmitters, and wavelength division multiplexing allowing stacking multiple time division multiplexed passive optical networks in wavelength domain.

In the upstream direction of TWDM-PONs, data is transmitted simultaneously on multiple wavelengths. Each wavelength is an independently modulated carrier operated with Time Division Multiple Access, or TDMA, where each Optical Network Unit or ONU is scheduled by an Optical Line Terminal or OLT within its own slot. Due to the pressure on ONU technology to be low cost, the transmitter is conventionally implemented using a thermally-tuned Directly Modulated Laser or DML. However, wavelength emitted by a DML is highly sensitive to temperature, as well as to the applied current. These characteristics of a DML are detrimental in terms of wavelength stability, since the wavelength is highly dependent on the operating conditions of DML.

Wavelength drift is indeed a problem that may prevent data reception or introduce crosstalk in the upstream transmission in time- and wavelength division multiplexed passive optical networks from multiple ONUs over a feeder fibre section to individual OLT receivers. Due to dense channel grid in TWDM-PONs, wavelengths must be very stable. However, transmitters typically used in PONs considerably suffer from wavelength drift problem, which causes the wavelength to shift beyond the acceptable boundaries. Due to the time-multiplexing aspect, the data transmission is performed in bursts. Typically, in the upstream direction of TWDM-PONs, data is modulated onto a DML in bursts lasting for example for microseconds, with for example a repetition period of 125 µs. When the transmitter becomes active, i.e. during the burst-on time, a drive current with non-zero mean is applied to the transmitter laser, which emits data, drive current which in turn leads to heat dissipation on the internal resistance of the device. This results in heating of the laser chip by its own drive current, so-called self-heating, which continuously alters the optical emission frequency of the laser during the burst emission. When no burst is being transmitted, i.e. during the burst-off time, the current is reduced below the threshold current and the laser is switched off, the extra heat is dissipated, and the laser is cooling again. Therefore, a typical burst mode operation consists of a repetition of the laser operating in on and off state, leading to a repeated frequency drift behaviour.

This type of modulation has two side-effects. First, the flow of current through the laser junction produces excess heat which is gradually heating up the laser structure during the burst-on time, resulting in a time-dependent wavelength shift called thermal chirp. After some time, for example typically tens of µs, depending on the chip size and its surroundings, a thermal quasi-equilibrium is achieved, and the wavelength shift ceases. Another side-effect is that the current density itself changes the carrier density, which then modulates the refractive index, and hence the emitted wavelength. As a result, the emitted wavelength is changing, which may lead to the signal drifting out of filter passband, or even a crosstalk to another channel.

Solutions for wavelength drift reduction exist, such as for example the one described in US2019/0238235A1. However, they do not fully address the challenges at hand. For example, a thermoelectric cooler or TEC is a standard element used to achieve tunability in DMLs to compensate for the wavelength drift. A TEC is used not only to thermally tune the wavelength, but also to stabilize it in case the ambient temperature is changing. However, a TEC is too slow as it takes tens of milliseconds or slower to react. Another solution is counter-heating which consists in applying the inverse of the burst envelope to a heating strip or a dummy waveguide of the transmitter structure to keep thermal equilibrium. This way, the central carrier frequency is constant. Even though counter-heating can be operated at a microsecond timescale, its implementation requires a dedicated heating element to be added at the stage of laser chip manufacturing. This solution adds complexity to the transmitter and the electrical signal of the burst envelop needs to be generated and applied using proper delay time. This requires a customized laser design for PON, which is costly due to relatively low volume production and hence lack of business interest from manufacturers. Moreover, real-time implementation of counter-heating control remains challenging in practice due to the required timescales at which the control mechanism needs to operate. A final solution are different forms of preamble engineering which can be used to reduce the wavelength drift at nanosecond timescales, by counterbalancing initial fast blue shift due to adiabatic chirp and other ultrafast carrier dynamics at turn on, with the thermal chirp producing red shift. As a result, initial wavelength overshoot can be substantially minimized, thus improving the overall wavelength drift. However, in one implementation, preamble's amplitude is slowly increased, which effectively means that the receiver cannot lock to it until sufficient amplitude is achieved. In another implementation, some bits are omitted from the preamble, making it non-standard and possibly increasing the locking time as well. Therefore, this solution increases upstream overhead.

It is important to mention that counter-heating and preamble engineering are only targeted at mitigating wavelength drift within the duration of a single burst. However, a major source of drift in actual system is due to adaptive changing of burst length according to ONU capacity needs, which is typically controlled by a dynamic bandwidth allocation mechanism.

### Summary

The scope of protection sought for various embodiments of the invention is set out by the independent claims.

The embodiments and features described in this specification that do not fall within the scope of the independent claims, if any, are to be interpreted as examples useful for understanding various embodiments of the invention.

There is a need for reducing the extent of the wavelength drift, or optical frequency drift, which originates from optical burst mode transmitters when their driving conditions change, without any additional hardware effort, but purely by changes to the signals being transmitted by one or more logical layers, such as for example at the media access control layer.

Amongst others, it is an object of embodiments of the invention to limit the extent of wavelength drift induced by thermal effects over timescales longer than a burst, which are caused by rapid change of burst allocation.

This object is achieved, according to a first example aspect of the present disclosure, by a device comprising a scheduling means configured to schedule an allocation of bursts to drive an optical burst mode transmitter in an optical communication network, wherein the scheduling means is further configured to:
- schedule a first allocation of bursts for the optical burst mode transmitter, wherein to the first allocation corresponds a first burst length;
- schedule a second allocation of bursts different from the first allocation for the optical burst mode transmitter, wherein to the second allocation corresponds a second burst length; and
CHARACTERIZED IN THAT the scheduling means is further configured to:
- scheduling a gradual adjustment of the allocation of bursts from the first allocation to the second allocation by scheduling a gradual adjustment of a length of the bursts from the first burst length to the second burst length when the scheduling means changes the allocation of bursts from the first allocation to the second allocation, thereby mitigating a wavelength drift originating from the optical burst mode transmitter.

The device according to a first example aspect of the present disclosure gradually adjusts the allocation of bursts to drive an optical burst mode transmitter from a first allocation to a second allocation different from the first allocation when the allocation of bursts for the optical burst mode transmitted is changed from the first allocation to the second allocation. By ramping up burst allocations, respectively by ramping down burst allocations, the device allows mitigating the wavelength drift which originates from the optical burst mode transmitter when the driving conditions of the optical burst mode transmitter change rapidly. This way, the extent of wavelength drift induced by thermal effects caused by rapid change of burst allocation over timescales longer than a burst in an optical burst mode transmitter is limited. The intelligent scheduling of bursts for the optical burst mode transmitter, i.e. the intelligent allocation of bursts for the optical burst mode transmitter, limits the wavelength drift caused by rapid change of burst allocation without any additional hardware effort within the optical communication network. Each of the second allocation of bursts is chosen by the device so as to limit the optical frequency excursion when driving the allocation of bursts up or down. This gradual change of upstream burst allocation slowly shifts the thermal equilibrium and this the wavelength of the optical burst mode transmitter. The slow shift of the thermal equilibrium can then be counterbalanced by for example a heater, such as a resistive heater, or a heat pump such as for example a thermoelectric cooler coupled to the optical burst mode transmitter. The limitation of the wavelength drift caused by rapid change of burst allocation is particularly applicable in two scenarios: upstream of a direct-detection TWDM-PON, where excursion could lead to moving the signal outside of channel filter and upstream of a coherent T(W)DM PON, where excursion could lead to moving the signal-local oscillator beating product outside of the receiver bandwidth. In other words, the device schedules burst length and burst repetition inside a frame of an optical burst mode transmitter or frame-by-frame to mitigate the central frequency shift of the optical burst mode transmitter under burst-mode operation.

The device according to the present disclosure changes the upstream burst allocation of the optical burst mode transmitter gradually instead of abruptly. Gradually adjusting the burst allocation in the context of the present disclosure corresponds to gradually increasing the burst allocation from the first allocation to the second allocation when the second allocation is larger than the first allocation. For example, gradually adjusting the burst allocation in the context of the present disclosure corresponds to gradually increasing the length of the bursts from a first burst length corresponding to the first allocation to a second burst length corresponding to the second allocation when the second allocation is larger than the first allocation. Respectively, gradually adjusting the burst allocation in the context of the present disclosure corresponds to gradually decreasing the burst allocation from the first allocation to the second allocation when the second allocation is smaller than the first allocation. For example, gradually adjusting the burst allocation in the context of the present disclosure corresponds to gradually decreasing the length of the bursts from a first burst length corresponding to the first allocation to a second burst length corresponding to the second allocation when the second allocation is smaller than the first allocation. Gradually adjusting in the context of the present disclosure corresponds to adjusting the burst allocation for example in discrete steps. In other words, gradually adjusting the burst allocation corresponds to increasing the burst allocation in discrete steps from the first allocation to the second allocation when the second allocation is larger than the first allocation. Respectively, gradually adjusting the burst allocation corresponds to decreasing the burst allocation in discrete steps from the first allocation to the second allocation when the second allocation is smaller than the first allocation. For example, the burst allocation is adjusted in small discrete steps with a minimum granularity of 1 µs. Alternatively, gradually adjusting in the context of the present disclosure corresponds to adjusting the burst allocation for example in steps not necessarily monotonically. In other words, gradually adjusting the burst allocation corresponds to increasing not monotonically the burst allocation from the first allocation to the second allocation when the second allocation is larger than the first allocation. Respectively, gradually adjusting the burst allocation corresponds to decreasing not monotonically the burst allocation in discrete steps from the first allocation to the second allocation when the second allocation is smaller than the first allocation. In the context of the present disclosure, a burst is for example an electrical burst. Alternatively, a burst in the context of the present disclosure is a data burst. Alternatively, for example, a "burst enable" signal could be generated in the optical communication network, wherein the "burst enable" signal would gate a continuous electrical signal to emit optical bursts. The continuous electrical signal would then have inter-burst gaps filled with some dummy data, and the dummy data would never be transmitted when the "burst enable" signal is off.

According to example embodiments, the scheduling means is configured to adjust the allocation of bursts in discrete steps from the first allocation to the second allocation.

According to further example embodiments, the scheduling means is configured to monotonically adjust the allocation of bursts from the first allocation to the second allocation.

Gradually adjusting the burst allocation in the context of the present disclosure corresponds to monotonically increasing the burst allocation from the first allocation to the second allocation when the second allocation is larger than the first allocation. For example, gradually adjusting the burst allocation in the context of the present disclosure corresponds to monotonically increasing the length of the bursts from a first burst length corresponding to the first allocation to a second burst length corresponding to the second allocation when the second allocation is larger than the first allocation. Respectively, monotonically adjusting the burst allocation in the context of the present disclosure corresponds to monotonically decreasing the burst allocation from the first allocation to the second allocation when the second allocation is smaller than the first allocation. For example, monotonically adjusting the burst allocation in the context of the present disclosure corresponds to monotonically decreasing the length of the bursts from a first burst length corresponding to the first allocation to a second burst length corresponding to the second allocation when the second allocation is smaller than the first allocation. The use of a linear function as a basis for gradual increase, respectively decrease, of an allocation of bursts is a special example of a monotonic increase, respectively decrease.

According to example embodiments, the scheduling means is configured to heuristically adjust the allocation of bursts from the first allocation to the second allocation.

For example, the scheduling means allow for increase, respectively decrease, of burst length by at most for example 1 µs per frame of the optical burst mode transmitter. Alternatively, the allocation of bursts could for example be based on one or more analytical formulae. An optimum adjustment of the allocation of bursts could be found for example by solving heat equations analytically or for example by performing simulations.

Additionally, the device may then further comprise a configuration means operationally coupled to the scheduling means; and wherein the configuration means is configured to receive a target capacity required for the optical communication network and a maximum latency for the optical communication network.

In order to schedule the gradual adjustment of the burst allocation for the optical burst mode transmitter, the device further comprises a configuration means configured to receive time constants of the optical burst mode transmitter as well as the desired capacity of the optical communication network and a maximum latency for the optical communication network. This way, the requirements of all the optical burst mode transmitters of the optical communication network are considered by the device to obtain optimum performance of the optical communication network.

Alternatively, the configuration means is further configured to receive one or more of the following:
- a thermal time constant of the optical burst mode transmitter;
- a profile of a current allocation of bursts for the optical burst mode transmitter;
- pre-characterized frequency shift/drift for the optical burst mode transmitter.

This way, the device obtains or gathers the required inputs to perform the scheduling of the optimum allocation of bursts for the optical burst mode transmitter using the boundary conditions on latency and throughput needs. The device can determine whether the optical burst mode transmitter is at thermal equilibrium. First, during a training phase, thermal equilibrium is established in the optical burst mode transmitter during a start-up phase. For example, empty windows can be generated the device for the optical burst mode transmitter. Alternatively, quiet windows may be used by the optical burst mode transmitter. This way, the initial central frequency shift and drift of the optical burst mode transmitter is permitted. In other words, the potential frequency excursion out of the WDM-band or out of the coherent receiving photodiode bandwidth is allowed. A shutter may be used at the side of the optical burst mode transmitter to avoid optical transmission towards the optical communication network while data bursts are applied to the optical burst mode transmitter during this warmup phase of the optical burst mode transmitter. Then, during an operational phase, depending on the desired capacity and latency requirements of all active optical burst mode transmitters of the optical communication network, different burst profiles, i.e. burst of different lengths and/or different repetitions of bursts, can be defined to mitigate central frequency drift of the individual optical burst mode transmitters. For example, idle and/or dummy data can be used as part of the bursts or even dummy bursts can be used to achieve the required allocation of bursts profile. Also, a heater and/or a TEC can be used to adapt the frequency of the optical burst mode transmitter if needed. Alternatively, pre-characterized frequency shift/drift for the optical burst mode transmitter can be determined during pre-characterization of the optical burst mode transmitter when the optical burst mode is not yet connected to an optical communication network, for example during manufacturing.

According to example embodiments, the configuration means is configured to:
- calculate a scheduled capacity in the optical communication network obtained when changing the allocation of bursts from the first allocation to the second allocation;
- when the scheduled capacity does not match the target capacity, calculate an optimized second allocation for which the scheduled capacity matches the target capacity;
and the scheduling means is further configured to gradually adjust the allocation of bursts from the first allocation to the optimized second allocation for the optical burst mode transmitter.

Since a gradual adjustment of the burst allocation effectively reduces the capacity of the optical communication network, the target value to which the capacity is increased is then determined by the device to compensate for the capacity lost during the burst allocation ramp-up or ramp-down. After the scheduled capacity is matched to the target capacity, the device further adjusts the allocation of bursts to the optimized second allocation. Since similar optical frequency excursions occur also when the allocation of bursts is throttled up or down, the device also gradually adjusts the allocation of bursts from the first allocation to the optimized second allocation for the optical burst mode transmitter. Alternatively, when the scheduled capacity does match the target capacity, the device maintains the allocation of bursts to the second allocation of bursts for the optical burst mode transmitter.

According to example embodiments, the scheduling means is further adapted to generate burst profiles for the first allocation of bursts and for the second allocation of bursts, wherein the burst profiles comprise one or more of the following:
- a burst length;
- a burst repetition;
- driving conditions for a heater and/or a heat pump operationally coupled with the optical burst mode transmitter;
- quiet windows for the optical burst mode transmitter.

A heat pump for example comprises a thermoelectric cooling.

According to example embodiments, the device is comprised in an Optical Line Termination of the optical communication network.

This way, the device may perform joint optimization of burst allocations for all optical burst mode transmitters of the optical communication network simultaneously.

According to example embodiments, the optical communication network is a Time and Wavelength Division Multiplexed Passive Optical Network and the optical burst mode transmitter is an Optical Network Unit transmitting data.

According to example embodiments, the scheduling means is further configured to schedule transmission of dummy data by the optical burst mode transmitter when the optical burst mode transmitter has no more data to transmit.

Since abrupt capacity changes are eliminated with the device, it is possible that during allocation of bursts, the optical burst mode transmitter has no more data to transmit. In this case, the device maintains the slowly changing pattern of allocation of bursts by transmitting dummy data.

According to example embodiments, the device is comprised in the optical burst mode transmitter and the device further comprises a requesting means configured to generate a request for the allocation of bursts and further configured to transmit the request to an Optical Line Termination of the optical communication network.

This way, an optical burst mode transmitter of the optical communication network can maintain its own device responsible for controlling the respective optical burst mode transmitter only. However, in this case, the output of the device would be a request for allocation of bursts to be sent by to the OLT.

According to a second example aspect, a method is disclosed for scheduling an allocation of bursts to drive an optical burst mode transmitter in an optical communication network, wherein the method comprises the steps of:
- scheduling a first allocation of bursts for the optical burst mode transmitter, wherein to the first allocation corresponds a first burst length;
- scheduling a second allocation of bursts different from the first allocation for the optical burst mode transmitter, wherein to the second allocation corresponds a second burst length; and
CHARACTERIZED IN THAT the method further comprises the step of:
- scheduling a gradual adjustment of the allocation of bursts from the first allocation to the second allocation by gradually adjusting a length of the bursts from the first burst length to the second burst length when the allocation of bursts is changed from the first allocation to the second allocation, thereby mitigating a wavelength drift originating from the optical burst mode transmitter.

The method according to a second example aspect of the present disclosure gradually adjusts the allocation of data bursts to drive an optical burst mode transmitter from a first allocation to a second allocation different from the first allocation when the allocation of bursts for the optical burst mode transmitted is changed from the first allocation to the second allocation. By ramping up burst allocations, respectively by ramping down burst allocations, the method allows mitigating the wavelength drift which originates from the optical burst mode transmitter when the driving conditions of the optical burst mode transmitter change rapidly. Ramping up or down in the context of the present disclosure does not imply that the allocation of bursts is adjusted monotonically. For example, the allocation of bursts may be non-monotonically adjusted, for example when approaching the adjustment of the allocation of bursts heuristically or analytically. This way, the extent of wavelength drift induced by thermal effects caused by rapid change of burst allocation over timescales longer than a burst in an optical burst mode transmitter is limited. The intelligent scheduling of bursts for the optical burst mode transmitter, i.e. the intelligent allocation of bursts for the optical burst mode transmitter, limits the wavelength drift caused by rapid change of burst allocation without any additional hardware effort within the optical communication network. Each of the second allocation of bursts is chosen by the device so as to limit the optical frequency excursion when driving the allocation of bursts up or down. This gradual change of upstream burst allocation slowly shifts the thermal equilibrium and this the wavelength of the optical burst mode transmitter. The slow shift of the thermal equilibrium can then be counterbalanced by for example a heater, such as for example a resistive heater, or a heat pump such as for example a thermoelectric cooler coupled to the optical burst mode transmitter. The limitation of the wavelength drift caused by rapid change of burst allocation is particularly applicable in two scenarios: upstream of a direct-detection TWDM-PON, where excursion could lead to moving the signal outside of channel filter and upstream of a coherent T(W)DM PON, where excursion could lead to moving the signal-local oscillator beating product outside of the receiver bandwidth. In other words, the method schedules burst length and burst repetition inside a frame of an optical burst mode transmitter or frame-by-frame to mitigate the central frequency shift of the optical burst mode transmitter under burst-mode operation.

According to a third example aspect, a computer program product is provided, wherein the computer program product comprises computer-executable instructions for causing a device for scheduling an allocation of bursts to drive an optical burst mode transmitter in an optical communication network to perform at least the following:
- scheduling a first allocation of bursts for said optical burst mode transmitter, wherein to the first allocation corresponds a first burst length;
- scheduling a second allocation of bursts different from said first allocation for said optical burst mode transmitter, wherein to the second allocation corresponds a second burst length; and
CHARACTERIZED IN THAT the computer-executable instructions further cause the device to further perform at least the following:
- scheduling a gradual adjustment of said allocation of bursts from said first allocation to said second allocation by gradually adjusting a length of the bursts from the first burst length to the second burst length when said allocation of bursts is changed from said first allocation to said second allocation, thereby mitigating a wavelength drift originating from the optical burst mode transmitter.

The computer program product according to a third example aspect of the present disclosure gradually adjusts the allocation of data bursts to drive an optical burst mode transmitter from a first allocation to a second allocation different from the first allocation when the allocation of bursts for the optical burst mode transmitted is changed from the first allocation to the second allocation. By ramping up burst allocations, respectively by ramping down burst allocations, the computer program product allows mitigating the wavelength drift which originates from the optical burst mode transmitter when the driving conditions of the optical burst mode transmitter change rapidly. This way, the extent of wavelength drift induced by thermal effects caused by rapid change of burst allocation over timescales longer than a burst in an optical burst mode transmitter is limited. The intelligent scheduling of bursts for the optical burst mode transmitter, i.e. the intelligent allocation of bursts for the optical burst mode transmitter, limits the wavelength drift caused by rapid change of burst allocation without any additional hardware effort within the optical communication network. Each of the second allocation of bursts is chosen by the device so as to limit the optical frequency excursion when driving the allocation of bursts up or down. This gradual change of upstream burst allocation slowly shifts the thermal equilibrium and this the wavelength of the optical burst mode transmitter. The slow shift of the thermal equilibrium can then be counterbalanced by for example a heater, such as for example a resistive heater, and/or a heat pump such as for example a thermoelectric cooler coupled to the optical burst mode transmitter. The limitation of the wavelength drift caused by rapid change of burst allocation is particularly applicable in two scenarios: upstream of a direct-detection TWDM-PON, where excursion could lead to moving the signal outside of channel filter and upstream of a coherent T(W)DM PON, where excursion could lead to moving the signal-local oscillator beating product outside of the receiver bandwidth. In other words, the computer program product schedules burst length and burst repetition inside a frame of an optical burst mode transmitter or frame-by-frame to mitigate the central frequency shift of the optical burst mode transmitter under burst-mode operation.

According to a fourth example aspect, a computer readable storage medium is provided, wherein the computer readable storage medium comprises computer-executable instructions for performing the following steps when the program is run on a computer for scheduling an allocation of bursts to drive an optical burst mode transmitter in an optical communication network:
- scheduling a first allocation of bursts for said optical burst mode transmitter, wherein to the first allocation corresponds a first burst length;
- scheduling a second allocation of bursts different from said first allocation for said optical burst mode transmitter, wherein to the second allocation corresponds a second burst length; and
CHARACTERIZED IN THAT the computer-executable instructions further perform the following step:
- scheduling a gradual adjustment of said allocation of bursts from said first allocation to said second allocation by gradually adjusting a length of the bursts from the first burst length to the second burst length when said allocation of bursts is changed from said first allocation to said second allocation, thereby mitigating a wavelength drift originating from the optical burst mode transmitter.

The computer readable storage medium according to a fourth example aspect of the present disclosure gradually adjusts the allocation of data bursts to drive an optical burst mode transmitter from a first allocation to a second allocation different from the first allocation when the allocation of bursts for the optical burst mode transmitted is changed from the first allocation to the second allocation. By ramping up burst allocations, respectively by ramping down burst allocations, the computer readable storage medium allows mitigating the wavelength drift which originates from the optical burst mode transmitter when the driving conditions of the optical burst mode transmitter change rapidly. This way, the extent of wavelength drift induced by thermal effects caused by rapid change of burst allocation over timescales longer than a burst in an optical burst mode transmitter is limited. The intelligent scheduling of bursts for the optical burst mode transmitter, i.e. the intelligent allocation of bursts for the optical burst mode transmitter, limits the wavelength drift caused by rapid change of burst allocation without any additional hardware effort within the optical communication network. Each of the second allocation of bursts is chosen by the device so as to limit the optical frequency excursion when driving the allocation of bursts up or down. This gradual change of upstream burst allocation slowly shifts the thermal equilibrium and this the wavelength of the optical burst mode transmitter. The slow shift of the thermal equilibrium can then be counterbalanced by for example a or a heater, such as for example a resistive heater, or heat pump such as for example a thermoelectric cooler coupled to the optical burst mode transmitter. The limitation of the wavelength drift caused by rapid change of burst allocation is particularly applicable in two scenarios: upstream of a direct-detection TWDM-PON, where excursion could lead to moving the signal outside of channel filter and upstream of a coherent T(W)DM PON, where excursion could lead to moving the signal-local oscillator beating product outside of the receiver bandwidth. In other words, the computer readable storage medium schedules burst length and burst repetition inside a frame of an optical burst mode transmitter or frame-by-frame to mitigate the central frequency shift of the optical burst mode transmitter under burst-mode operation.

### Brief Description of the Drawings

Some example embodiments will now be described with reference to the accompanying drawings.
Figs. 1A depicts an example embodiment of an optical communication network.
Figs. 1B to 1F show example embodiments of prior art challenges.
Fig. 2 shows an example embodiment of a device according to the present disclosure.
Fig. 3 shows an example embodiment of a gradual adjustment of the allocation of bursts.
Fig. 4 shows an example embodiment of a gradual adjustment of the allocation of bursts.
Fig. 5 shows an example embodiment of a capacity recovery.
Fig. 6 shows an example embodiment of a flexible allocation of repetition and burst length according to the thermal recovery time of the optical burst mode transmitter.
Fig. 7 shows an example embodiment of a suitable computing system 800 for performing one or several steps in embodiments of the invention.

### Detailed Description of Embodiment(s)

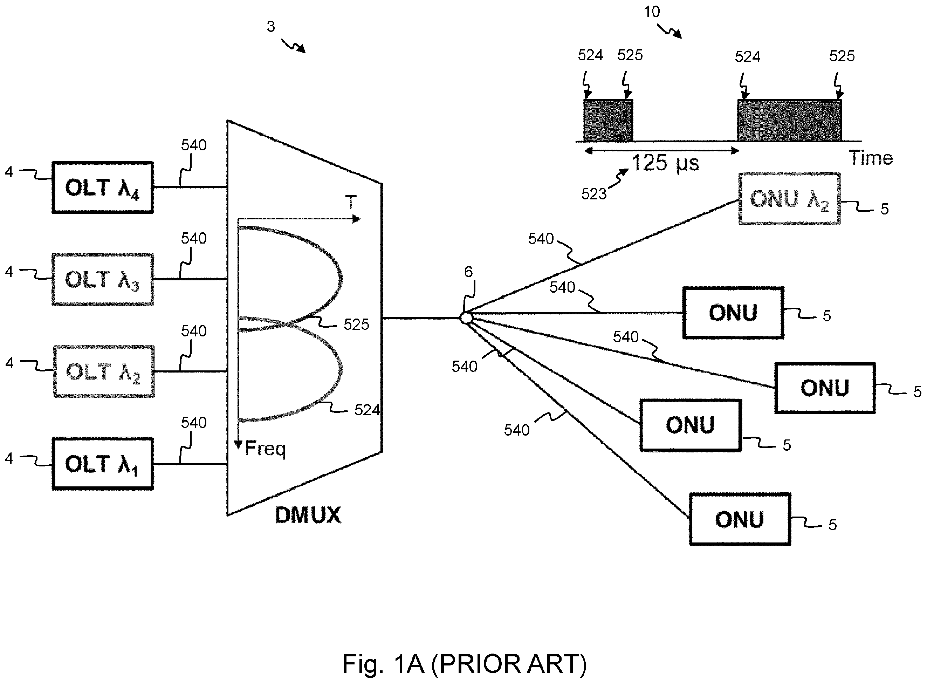

Fig. 1A illustrates an optical communication network 3, for example a Passive Optical Network, in which an optical signal may be transmitted through fibre connections 540. The optical communication network 3 comprises one or more Optical Line Terminations or OLTs 4 placed at the service provider's central office, and one or more Optical Network Units or ONUs 5. An unpowered optical splitter 6 allows to distribute input received from the OLT 4 towards the connected ONUs 5. The figure illustrates that a single optical fibre 540 serves multiple endpoints 5, such that one optical signal is broadcasted to every connected endpoint 5. According to an alternative embodiment, each endpoint 5 is broadcasted an optical signal from a plurality of optical fibre 540. One of the OLTs functions with the wavelength *λ*₂ falling within the bandwidth of an optical filter 524 and one of the ONUs functions with the wavelength *λ*₂. One of the OLTs functions with the wavelength *λ*₃ falling within the bandwidth of an optical filter 525 and one of the ONUs functions with the wavelength *λ*₃. The optical burst mode transmitter comprises frames 523 with a length of 125 µs for the burst allocation 10. There is a risk for loss of signal and for crosstalk between the wavelengths *λ*₂ 524 and *λ*₃ 525 when the wavelength of the optical burst mode transmitter drifts.

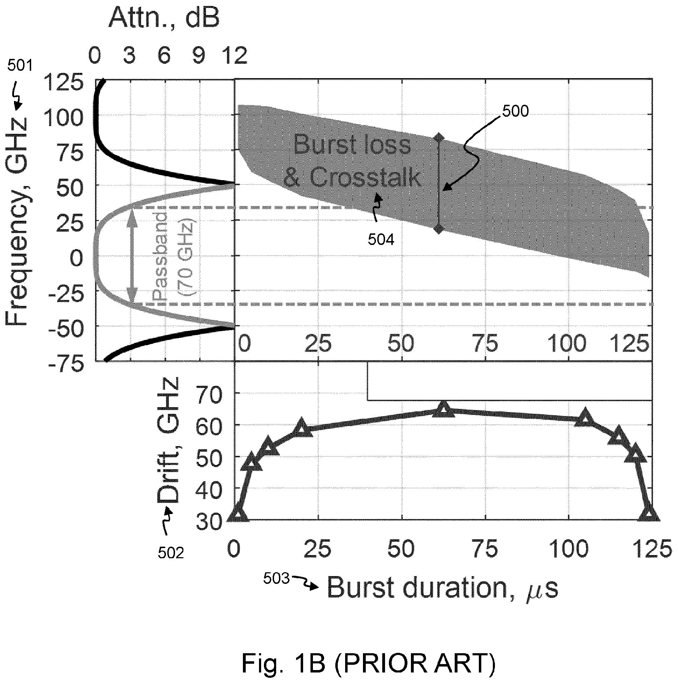

In Fig. 1B depicting a situation from the prior art, the frequency shift and drift challenge in T(W)DM-PON upstream direction is clear. In this example, TDMA is applied in upstream direction of the PON and burst operation is applied to an optical burst mode transmitter. Bursts of 1 to 124 µs at 2.5 Gbit/s NRZ-OOK are applied to an optical burst mode transmitter comprising frames with a length of 125 µs. The frequency 501 of the optical burst mode transmitter is plotted in function of the burst duration 503. The drift 502 in GHz of the frequency of the optical burst mode transmitter is also plotted in function of the burst duration 503. It is clear from Fig. 1B that switching on and off the optical burst mode transmitter such as for example an Optical Network Unit of the PON generates heat and carrier distribution changes in the laser. There is a clear central frequency drift 500 and frequency drift 500 as a function of burst length and repetition visible on Fig. 1B. There exists a real need in TWDM-PON to prevent crosstalk 504 and loss of signal power. Also, a remaining challenge in future coherent-receiver-based PON remains preventing the loss of signal.

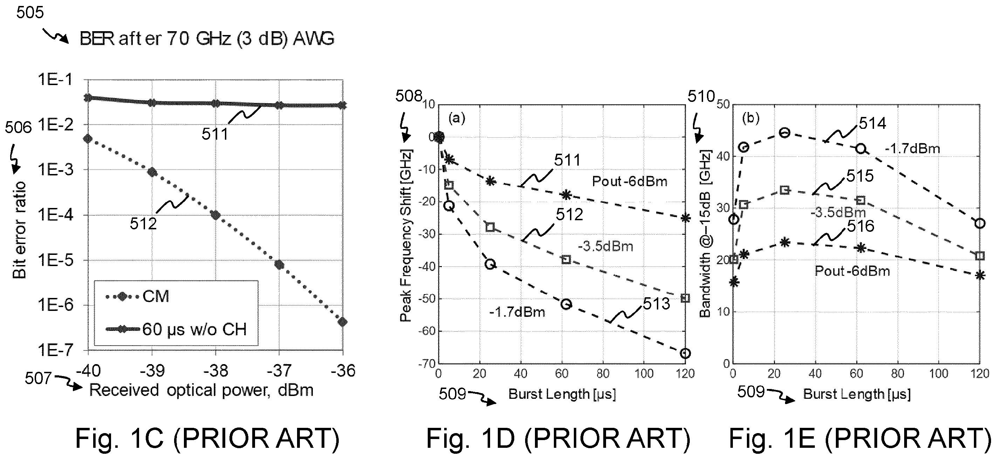

In Fig. 1C depicting a situation from the prior art, a Bit Error Rate measurement 505 of an Optical Network Unit in T(W)DM-PON upstream direction is depicted. The Bit Error Rate ratio 506 is plotted in function of the received optical power 507 for a measurement after a 70GHz Arrayed Waveguide Grating. The Bit Error Rate measurement 505 is depicted in continuous mode 512 and in pulse mode 511 under pulses of 60 µs and operating under counter-heating. It is clear from Fig. 1C that the signal from the optical burst mode transmitter may be completely lost in burst mode.

In Fig. 1D depicting a situation from the prior art, the peak frequency shift 508 of an optical burst mode transmitter is depicted in function of the burst length 509. Bursts of 1 to 124 µs at 2.5 Gbit/s NRZ-OOK are applied to an optical burst mode transmitter comprising frames with a length of 125 µs. The peak frequency shift 508 is plotted for an output power of -6 dBm in curve 511, for an output power of -3.5 dBm in curve 512 and for an output power of -1.7 dBm in curve 513. In Fig. 1E depicting a situation from the prior art, the bandwidth 510 at -15 dBm of an optical burst mode transmitter is depicted in function of the burst length 509. Bursts of 1 to 124 µs at 2.5 Gbit/s NRZ-OOK are applied to an optical burst mode transmitter comprising frames with a length of 125 µs. The bandwidth 510 is plotted for an output power of -6 dBm in curve 516, for an output power of -3.5 dBm in curve 515 and for an output power of -1.7 dBm in curve 514. It is clear from Figs. 1D and 1E that the central frequency shift of the optical burst mode transmitter increases with increasing burst length.

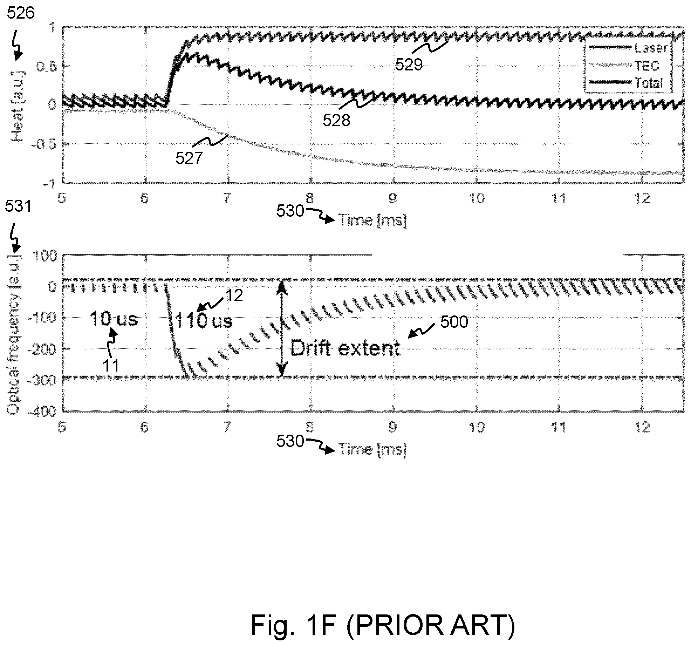

A reference simulation case is depicted in Fig. 1F. Components having identical reference numbers than on previous figures fulfil the same function. For this reference case, the allocation of bursts of the optical burst mode transmitter is changed abruptly in one step from 10 µs to 110 µs. The burst allocation is here repeated every 125 µs-long PON frame. In this example, the thermal time constant of the laser is 1 and the thermal time constant of the heat pump is 10. The top plot of Fig. 1F depicts the simulated heat 526 generated at, i.e. delivered to the active region by the optical burst mode transmitter in curve 529, by the heat pump in curve 527, and by their sum in curve 528, in function of the time 530. The bottom plot of Fig. 1F depicts the simulated evolution of the instantaneous value of the optical frequency 531, which is inversely proportional to the wavelength, in function of the time 530. The change from a first allocation 11 of bursts at 10 µs to a second allocation 12 of bursts at 110 µs occurs at around 6.2 ms of the simulation time. It is seen on Fig. 1F that the average temperature of the optical burst mode transmitter starts increasing, and that as a result the emitted optical frequency of the optical burst mode transmitter decreases. Since the aim of the heat pump is to stabilize the average temperature, the extra generated heat is subsequently removed by the heat pump. However, this process occurs slowly due to the large heat capacity of the optical burst mode transmitter and of the optical communication network, and the abrupt changes lead to wavelength under or over shoots when the heat pump cannot catch up with the compensation. As a result, changing the allocation of bursts abruptly results in a rapid excursion of the optical frequency of the optical burst mode transmitter. When changing the burst allocation, new thermal equilibrium must be established. This excursion affects multiple bursts and, if not prevented, may lead to signal loss of the drifting channel if the optical frequency drifts out of the filter bandwidth, or, additionally, crosstalk into another wavelength demultiplexing channel may occur if the excursion is very large. On Fig. 1F, the optical carrier frequency drift 500 of the optical burst mode transmitter is 313 a.u..

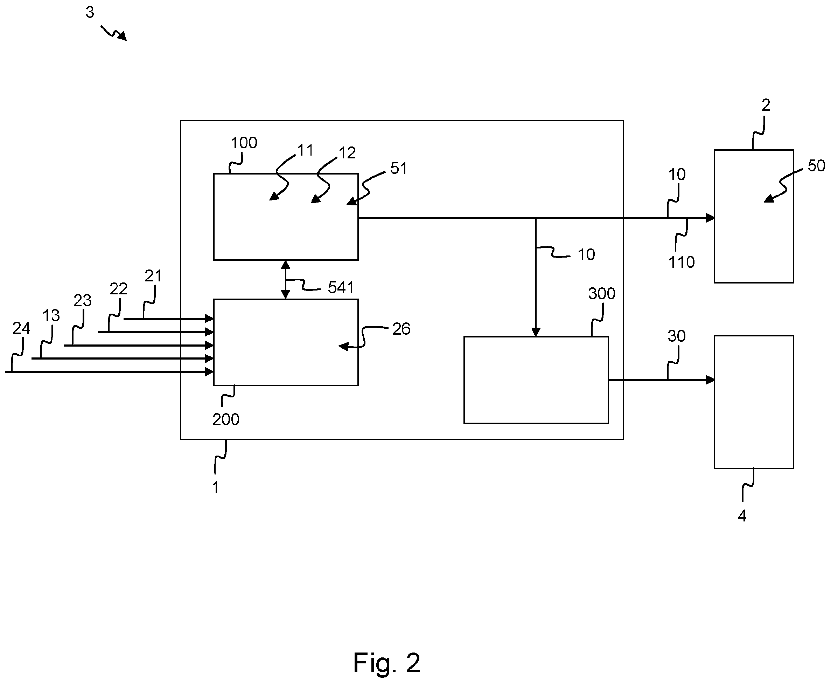

Fig. 2 schematically illustrates an example of an embodiment of a device 1 according to the present disclosure. Components having identical reference numbers than on previous figures fulfil the same function. The device 1 comprises a scheduling means 100, optionally a configuration means 200, and optionally a requesting means. The scheduling means 100 is configured to schedule an allocation 10 of bursts to drive an optical burst mode transmitter 2 in an optical communication network 3. The scheduling means 100 is configured to schedule a first allocation 11 of bursts for the optical burst mode transmitter 2. The scheduling means 100 is further configured to schedule a second allocation 12 of bursts for the optical burst mode transmitter 2, wherein the second allocation 12 of bursts is different from the first allocation 11 of bursts. The scheduling means 100 is further configured to gradually adjust the allocation of bursts from the first allocation 11 to the second allocation 12 when the allocation 10 of bursts is changed from the first allocation 11 to the second allocation 12. The scheduling means 100 is configured to adjust the allocation 10 of bursts in discrete steps from the first allocation 11 to the second allocation 12. The scheduling means 100 is configured to adjust the allocation 10 of bursts monotonically from the first allocation 11 to the second allocation 12. The scheduling means 100 is configured to adjust the allocation 10 of bursts heuristically from the first allocation 11 to the second allocation 12. The configuration means 200 is operationally coupled to the scheduling means via the connection 541. The configuration means 200 receives a target capacity 21 required for the optical communication network 3 and a maximum latency 22 for the optical communication network 3. The configuration means 200 is further configured to receive a thermal time constant 23 of the optical burst mode transmitter 2 and/or a profile of a current allocation 13 of bursts for the optical burst mode transmitter 2 and/or a pre-characterized frequency shift/drift 24 for the optical burst mode transmitter. The configuration means is further configured to calculate a scheduled capacity 26 in the optical communication network 3 obtained when changing the allocation 10 of bursts from the first allocation 11 to the second allocation 12. When the scheduled capacity 26 does not match the target capacity 21, the configuration means 200 calculates an optimized second allocation 14 for which the scheduled capacity 26 matches the target capacity 21. The scheduling means 100 then gradually adjusts the allocation 10 of bursts from the first allocation 11 to the optimized second allocation 14 for the optical burst mode transmitter 2. The scheduling means 100 also generates burst profiles 110 for the first allocation 11 of bursts and for the second allocation 12 of bursts, wherein the bursts profiles 110 comprise one or more of the following: a burst length 534;535, a burst repetition, driving conditions for a heater, such as a resistive heater, or a heat pump operationally coupled with the optical burst mode transmitter 2, quiet windows for the optical burst mode transmitter 2. Optionally, the device 1 is comprised in an Optical Line Termination 4 of the optical communication network 3. Optionally, the optical communication network is a Time and Wavelength Division Multiplexed Passive Optical Network and the optical burst mode transmitter 2 is an Optical Network Unit 5 transmitting data 50. Optionally, the scheduling means is configured to schedule transmission of dummy data 51 by the optical burst mode transmitter 2 when the optical burst mode transmitter 2 had no more data 50 to transmit. Optionally, the device 1 further comprises a requesting means 300 configured to generate a request for the allocation 10 of bursts and wherein the requesting means 300 is further configured to transmit the request 30 to an Optical Line Termination 4 of the optical communication network 3.

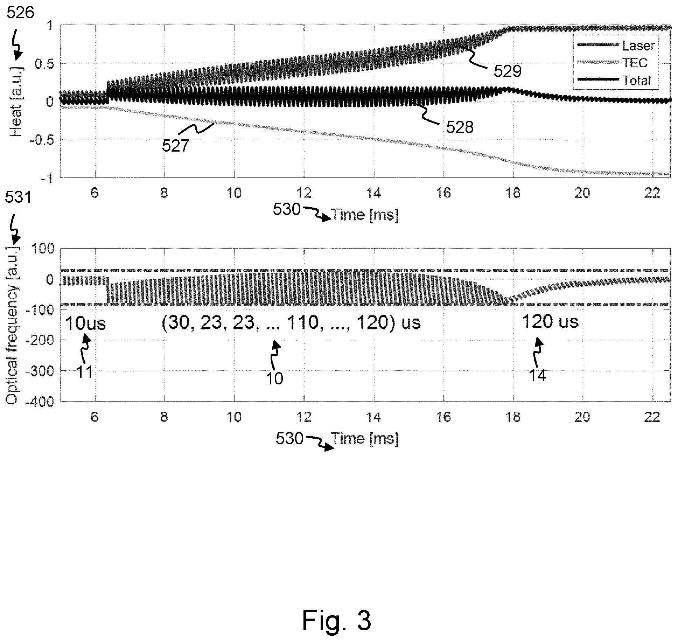

A simulation case of the optical communication network with the device 1 of Fig. 2 is depicted in Fig. 3. Components having identical reference numbers than on previous figures fulfil the same function. For this simulation case, the allocation of bursts of the optical burst mode transmitter is changed gradually in small discrete steps from 10 µs to 120 µs with a minimum granularity of 1 µs. The burst allocation is here repeated every 125 µs-long PON frame. The top plot of Fig. 3 depicts the simulated heat 526 generated at, i.e. delivered to the active region by the optical burst mode transmitter in curve 529, by the heat pump in curve 527, and by their sum in curve 528, in function of the time 530. The bottom plot of Fig. 3 depicts the simulated evolution of the instantaneous value of the optical frequency 531, which is inversely proportional to the wavelength, in function of the time 530. The change from a first allocation 11 of bursts at 10 µs to a second optimized allocation 14 of bursts at 120 µs occurs at around 6.2 ms of the simulation time. The allocation 10 of bursts is adjusted such that each next allocation 10 of bursts is chosen to limit the optical frequency excursion. The length of the bursts does not necessarily need to be monotonically adjusted. For example on Fig. 3, the allocation 10 of bursts is 10 µs, 30 µs, 23 µs, etc.. It is seen on Fig. 3 that the average temperature of the optical burst mode transmitter starts increasing, and that as a result the emitted optical frequency of the optical burst mode transmitter slightly decreases. Since the aim of the heat pump is to stabilize the average temperature, the extra generated heat is subsequently removed by the heat pump. Since a slowly increasing burst allocation effectively reduces the capacity of the optical communication network 3, the target capacity 21 to which the scheduled capacity 26 is increased is then chose as 120 µs instead of 110 µs as in the reference case depicted on Fig. 1G, to compensate for the capacity lost during the ramp-up of the allocation 10 of bursts. As a result, changing the allocation of bursts gradually results in a lower excursion of the optical frequency of the optical burst mode transmitter 2. On Fig. 3, the optical carrier frequency drift 500 of the optical burst mode transmitter 2 is 110 a.u., which is 60% less than the optical carrier frequency drift 500 of the optical burst mode transmitter 2 in Fig. 1G.

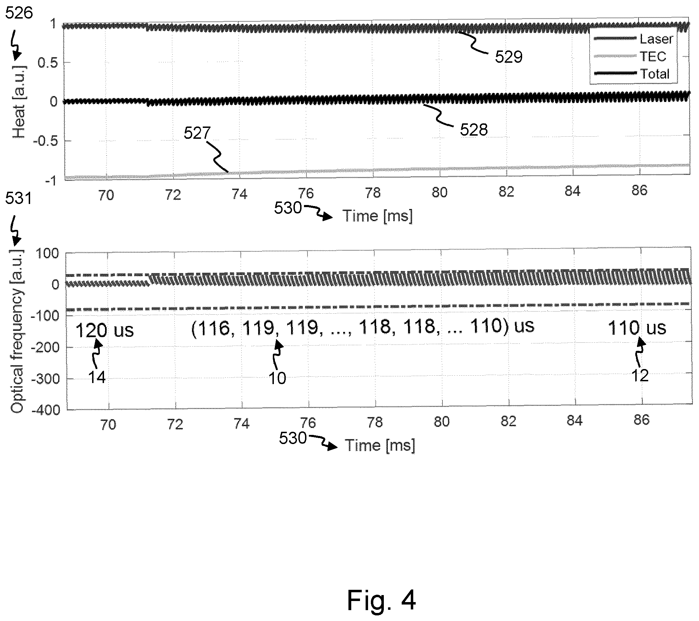

A simulation case of the optical communication network with the device 1 of Fig. 2 is depicted in Fig. 4. Components having identical reference numbers than on previous figures fulfil the same function. The burst allocation is here repeated every 125 µs-long PON frame. The top plot of Fig. 4 depicts the simulated heat 526 generated at, i.e. delivered to the active region by the optical burst mode transmitter in curve 529, by the heat pump in curve 527, and by their sum in curve 528, in function of the time 530. The bottom plot of Fig. 4 depicts the simulated evolution of the instantaneous value of the optical frequency 531, which is inversely proportional to the wavelength, in function of the time 530. For this simulation case, the allocation 10 of bursts of the optical burst mode transmitter is the optimized second allocation 14. The change from a first allocation 11 of bursts which corresponds to the optimized second allocation 14 at 120 µs to a second allocation 12 of bursts at 110 µs. The allocation 10 of bursts is adjusted such that each next allocation 10 of bursts is chosen to limit the optical frequency excursion. The length of the bursts does not necessarily need to be monotonically adjusted. For example on Fig. 4, the allocation 10 of bursts is 116 µs, 119 µs, 118 µs, etc.. It is seen on Fig. 4 that the average temperature of the optical burst mode transmitter starts decreasing, and that as a result the emitted optical frequency of the optical burst mode transmitter slightly increases. Since the aim of the heat pump is to stabilize the average temperature, the extra generated heat is subsequently removed by the heat pump. As a result, changing the allocation of bursts gradually results in a lower excursion of the optical frequency of the optical burst mode transmitter 2. On Fig. 4, the optical carrier frequency drift 500 of the optical burst mode transmitter 2 is 110 a.u., which is 60% less than the optical carrier frequency drift 500 of the optical burst mode transmitter 2 in Fig. 1G.

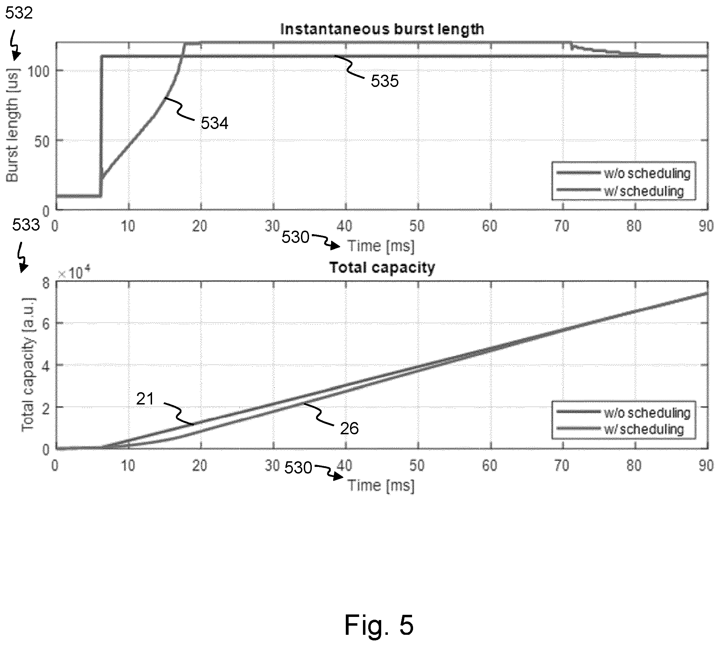

Fig. 5 shows the instantaneous burst length 532 versus time 530 as well as the evolution of the total capacity 533 in time 530. Components having identical reference numbers than on previous figures fulfil the same function. For the reference case depicted on Fig. 1G, the instantaneous burst length 534 changes abruptly from 10 µs to 110 µs. The target capacity 21 is then achieved. For the simulated case comprising the scheduling of the adjustment of the allocation of bursts depicted on Fig. 3 and Fig. 4, the instantaneous burst length 535 changes gradually, not necessarily monotonically, from 10 µs to 120 µs to then change gradually, not necessarily monotonically, from 120 µs to 110 µs. The scheduled capacity 22 achieved by the scheduling of the adjustment of the allocation of bursts by the device of Fig. 2 is very comparable to the target capacity achieved with an abrupt change of allocation of bursts.

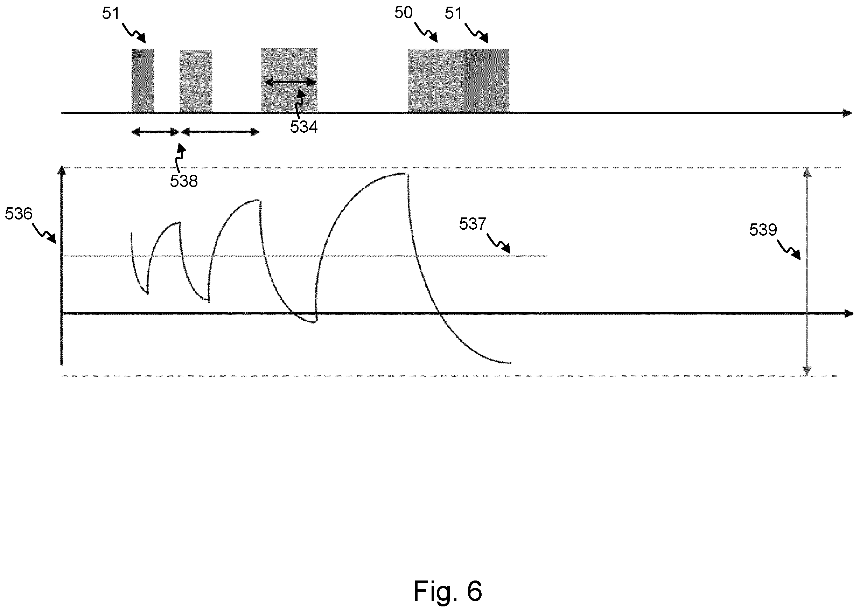

Fig. 6 illustrates a flexible allocation of repetition and burst length according to thermal recovery time of the optical burst mode transmitter 2. Components having identical reference numbers than on previous figures fulfil the same function. The optical burst mode transmitter 2 demonstrates a carrier frequency 536 which fluctuates around a central carrier frequency 537. Intelligent scheduling of the burst length 534 and of the burst repetition 538 through the use of the device 1 according to the present disclosure allows to keep the central carrier frequency within the WDM channel width/ within the photodiode bandwidth 539, thereby preventing loss of signal. The device 1 schedules transmission of dummy data 51 by the optical burst mode transmitter 2 when the optical burst mode transmitter 2 has no more data 50 to transmit in order to maintain the slowly changing burst allocation pattern.

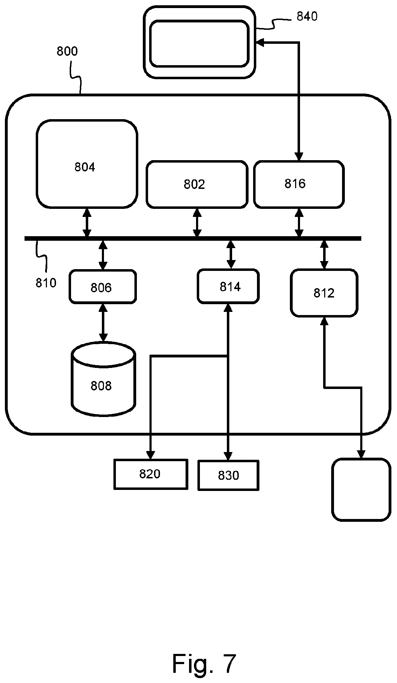

Fig. 7 shows a suitable computing system 800 enabling to implement embodiments of the controller 101. Computing system 800 may in general be formed as a suitable general-purpose computer and comprise a bus 810, a processor 802, a local memory 804, one or more optional input interfaces 814, one or more optional output interfaces 816, a communication interface 812, a storage element interface 806, and one or more storage elements 808. Bus 810 may comprise one or more conductors that permit communication among the components of the computing system 800. Processor 802 may include any type of conventional processor or microprocessor that interprets and executes programming instructions. Local memory 804 may include a random-access memory (RAM) or another type of dynamic storage device that stores information and instructions for execution by processor 802 and/or a read only memory (ROM) or another type of static storage device that stores static information and instructions for use by processor 802. Input interface 814 may comprise one or more conventional mechanisms that permit an operator or user to input information to the computing device 800, such as a keyboard 820, a mouse 830, a pen, voice recognition and/or biometric mechanisms, a camera, etc. Output interface 816 may comprise one or more conventional mechanisms that output information to the operator or user, such as a display 840, etc. Communication interface 812 may comprise any transceiver-like mechanism such as for example one or more Ethernet interfaces that enables computing system 800 to communicate with other devices and/or systems, for example with other computing devices 881, 882, 883. The communication interface 812 of computing system 800 may be connected to such another computing system by means of a local area network (LAN) or a wide area network (WAN) such as for example the internet. Storage element interface 806 may comprise a storage interface such as for example a Serial Advanced Technology Attachment (SATA) interface or a Small Computer System Interface (SCSI) for connecting bus 810 to one or more storage elements 808, such as one or more local disks, for example SATA disk drives, and control the reading and writing of data to and/or from these storage elements 808. Although the storage element(s) 808 above is/are described as a local disk, in general any other suitable computer-readable media such as a removable magnetic disk, optical storage media such as a CD or DVD, - ROM disk, solid state drives, flash memory cards, ... could be used. Computing system 500 could thus correspond to the controller 101.

As used in this application, the term "circuitry" may refer to one or more or all of the following:
(a) hardware-only circuit implementations such as implementations in only analog and/or digital circuitry and
(b) combinations of hardware circuits and software, such as (as applicable):
   (i) a combination of analog and/or digital hardware circuit(s) with software/firmware and
   (ii) any portions of hardware processor(s) with software (including digital signal processor(s)), software, and memory(ies) that work together to cause an apparatus, such as a mobile phone or server, to perform various functions) and
(c) hardware circuit(s) and/or processor(s), such as microprocessor(s) or a portion of a microprocessor(s), that requires software (e.g. firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in a server, a cellular network device, or other computing or network device.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A device (1) comprising a scheduling means (100) configured to schedule an allocation (10) of bursts to drive an optical burst mode directly modulated laser transmitter (2) in an optical communication network (3), wherein said scheduling means (100) is further configured to:
- schedule a first allocation (11) of bursts for said optical burst mode transmitter (2), wherein to said first allocation (11) corresponds a first burst length;
- schedule a second allocation (12) of bursts different from said first allocation (11) for said optical burst mode transmitter (2), wherein to said second allocation (12) corresponds a second burst length; and
**CHARACTERIZED IN THAT** said scheduling means (100) is further configured to:
- schedule a gradual adjustment of said allocation (10) of bursts from said first allocation (11) to said second allocation (12) by scheduling a gradual adjustment of a length of said bursts from said first burst length to said second burst length, thereby mitigating a wavelength drift originating from said optical burst mode transmitter (2) upon said change.

2. A device (1) according to claim 1, wherein said scheduling means (100) is configured to adjust said allocation (10) of bursts in discrete steps from said first allocation (11) to said second allocation (12).

3. A device (1) according to claim 1, wherein said scheduling means (100) is configured to monotonically adjust said allocation (10) of bursts from said first allocation (11) to said second allocation (12).

4. A device (1) according to claim 1, wherein said scheduling means (100) is configured to heuristically adjust said allocation (10) of bursts from said first allocation (11) to said second allocation (12).

5. A device (1) according to one of the preceding claims, wherein said device (1) further comprises a configuration means (200) operationally coupled to said scheduling means (100); and wherein said configuration means (200) is configured to receive a target capacity (21) required for said optical communication network (3) and a maximum latency (22) for said optical communication network (3).

6. A device (1) according to claim 5, wherein said configuration means (200) is further configured to receive one or more of the following:
- a thermal time constant (23) of said optical burst mode transmitter (2);
- a profile of a current allocation (13) of bursts for said optical burst mode transmitter (2);
- pre-characterized frequency shift/drift (24) for said optical burst mode transmitter (2).

7. A device (1) according to claim 6, wherein said configuration means (200) is configured to:
- calculate a scheduled capacity (25) in said optical communication network (3) obtained when changing said allocation (10) of bursts from said first allocation (11) to said second allocation (12);
- when said scheduled capacity (25) does not match said target capacity (21), calculate an optimized second allocation (14) for which said scheduled capacity (25) matches said target capacity (21);
and wherein said scheduling means (100) is further configured gradually adjust the allocation (10) of bursts from the first allocation (11) to the optimized second allocation (14) for said optical burst mode transmitter (2).

8. A device (1) according to claim 6 or 7, wherein said scheduling means (100) is further adapted to generate burst profiles (110) for said first allocation (11) of bursts and for said second allocation (12) of bursts, wherein said burst profiles (110) comprise one or more of the following:
- a burst length;
- a burst repetition;
- driving conditions for a heater and/or a heat pump operationally coupled with said optical burst mode transmitter (2);
- quiet windows for said optical burst mode transmitter (2).

9. A device (1) according to claim 1, wherein said device (1) is comprised in an Optical Line Termination (4) of said optical communication network (3).

10. A device (1) according to claim 1, wherein said optical communication network (3) is a Time and Wavelength Division Multiplexed Passive Optical Network and wherein said optical burst mode transmitter (2) is an Optical Network Unit (5) transmitting data (50).

11. A device (1) according to claim 9, wherein said scheduling means (100) is further configured to schedule transmission of dummy data (51) by said optical burst mode transmitter (2) when said optical burst mode transmitter (2) has no more data (50) to transmit.

12. A device (1) according to one of the preceding claims, wherein said device (1) is comprised in said optical burst mode transmitter (2) and wherein said device (1) further comprises a requesting means (300) configured to generate a request (30) for said allocation (10) of bursts and further configured to transmit said request (30) to an Optical Line Termination (4) of said optical communication network (3).

13. A method for scheduling an allocation (10) of bursts to drive an optical burst mode directly modulated laser transmitter (2) in an optical communication network (3), wherein said method comprises the steps of:
- scheduling a first allocation (11) of bursts for said optical burst mode transmitter (2), wherein to said first allocation (11) corresponds a first burst length;
- scheduling a second allocation (12) of bursts different from said first allocation (11) for said optical burst mode transmitter (2), wherein to said second allocation (12) corresponds a second burst length; and
**CHARACTERIZED IN THAT** said method further comprises the step of:
- scheduling a gradual adjustment of said allocation (10) of bursts from said first allocation (11) to said second allocation (12) by scheduling a gradual adjustment of a length of said bursts from said first burst length to said second burst length, thereby mitigating a wavelength drift originating from said optical burst mode transmitter (2) upon said change.

14. A computer program product comprising computer-executable instructions for causing a device for scheduling an allocation (10) of bursts to drive an optical burst mode directly modulated laser transmitter (2) in an optical communication network (3) to perform at least the following:
- scheduling a first allocation (11) of bursts for said optical burst mode transmitter (2), wherein to said first allocation (11) corresponds a first burst length;
- scheduling a second allocation (12) of bursts different from said first allocation (11) for said optical burst mode transmitter (2), wherein to said second allocation (12) corresponds a second burst length; and
**CHARACTERIZED IN THAT** said computer-executable instructions further cause said device to further perform at least the following:
- scheduling a gradual adjustment of said allocation (10) of bursts from said first allocation (11) to said second allocation (12) by scheduling a gradual adjustment of a length of said bursts from said first burst length to said second burst length, thereby mitigating a wavelength drift originating from said optical burst mode transmitter (2) upon said change.

15. A computer readable storage medium comprising computer-executable instructions for performing the following steps when the program is run on a computer for scheduling an allocation (10) of bursts to drive an optical burst mode directly modulated laser transmitter (2) in an optical communication network (3):
- scheduling a first allocation (11) of bursts for said optical burst mode transmitter (2), wherein to said first allocation (11) corresponds a first burst length;
- scheduling a second allocation (12) of bursts different from said first allocation (11) for said optical burst mode transmitter (2), wherein to said second allocation (12) corresponds a second burst length; and
**CHARACTERIZED IN THAT** said computer-executable instructions further perform the following step:
- scheduling a gradual adjustment of said allocation (10) of bursts from said first allocation (11) to said second allocation (12) by scheduling a gradual adjustment of a length of said bursts from said first burst length to said second burst length, thereby mitigating a wavelength drift originating from said optical burst mode transmitter (2) upon said change.

## Patentansprüche

1. Vorrichtung (1), die ein Planungsmittel (100) umfasst, das so konfiguriert ist, dass es eine Zuweisung (10) von Bursts plant, um einen direkt modulierten optischen Burst-Modus-Lasersender (2) in einem optischen Kommunikationsnetzwerk (3) anzusteuern, wobei das Planungsmittel (100) ferner konfiguriert ist zum:
- Planen einer ersten Zuweisung (11) von Bursts für den optischen Burst-Modus-Sender (2), wobei der ersten Zuweisung (11) eine erste Burstlänge entspricht;
- Planen einer zweiten Zuweisung (12) von Bursts, die sich von der ersten Zuweisung (11) für den optischen Burst-Modus-Sender (2) unterscheidet, wobei der zweiten Zuweisung (12) eine zweite Burstlänge entspricht; und
**DADURCH GEKENNZEICHNET, DASS** das Planungsmittel (100) ferner konfiguriert ist zum:
- Planen einer allmählichen Anpassung der Zuweisung (10) von Bursts von der ersten Zuweisung (11) an die zweite Zuweisung (12), indem eine allmähliche Anpassung einer Länge der Bursts von der ersten Burst-Länge an die zweite Burst-Länge geplant wird, wodurch eine Wellenlängendrift, die von dem optischen Burst-Modus-Sender (2) bei der Änderung ausgeht, abgeschwächt wird.

2. Vorrichtung (1) nach Anspruch 1, wobei das Planungsmittel (100) konfiguriert ist, um die Zuweisung (10) von Bursts in diskreten Schritten von der ersten Zuweisung (11) an die zweite Zuweisung (12) anzupassen.

3. Vorrichtung (1) nach Anspruch 1, wobei das Planungsmittel (100) konfiguriert ist, um die Zuweisung (10) von Bursts monoton von der ersten Zuweisung (11) an die zweite Zuweisung (12) anzupassen.

4. Vorrichtung (1) nach Anspruch 1, wobei das Planungsmittel (100) konfiguriert ist, um die Zuweisung (10) von Bursts heuristisch von der ersten Zuweisung (11) an die zweite Zuweisung (12) anzupassen.

5. Vorrichtung (1) nach einem der vorstehenden Ansprüche, wobei die Vorrichtung (1) ferner ein Konfigurationsmittel (200) umfasst, das betriebsmäßig mit dem Planungsmittel (100) gekoppelt ist; und wobei das Konfigurationsmittel (200) konfiguriert ist, um eine für das optische Kommunikationsnetz (3) erforderliche Zielkapazität (21) und eine maximale Latenz (22) für das optische Kommunikationsnetz (3) zu empfangen.

6. Vorrichtung (1) nach Anspruch 5, wobei das Konfigurationsmittel (200) ferner konfiguriert ist, um eines oder mehrere von Folgendem zu empfangen:
- eine thermische Zeitkonstante (23) des optischen Burst-Modus-Senders (2);
- ein Profil einer aktuellen Zuweisung (13) von Bursts für den optischen Burst-Modus-Sender (2);
- vorcharakterisierte Frequenzverschiebung/Drift (24) für den optischen Burst-Modus-Sender (2).

7. Vorrichtung (1) nach Anspruch 6, wobei das Konfigurationsmittel (200) konfiguriert ist zum:
- Berechnen einer geplanten Kapazität (25) in dem optischen Kommunikationsnetz (3), die erhalten wird, wenn die Zuweisung (10) von Bursts von der ersten Zuweisung (11) zu der zweiten Zuweisung (12) geändert wird;
- Berechnen, wenn die geplante Kapazität (25) nicht mit der Zielkapazität (21) übereinstimmt, einer optimierten zweiten Zuweisung (14), für die die geplante Kapazität (25) mit der Zielkapazität (21) übereinstimmt;
und wobei das Planungsmittel (100) ferner konfiguriert ist, um die Zuweisung (10) von Bursts allmählich von der ersten Zuweisung (11) an die optimierte zweite Zuweisung (14) für den optischen Burst-Modus-Sender (2) anzupassen.

8. Vorrichtung (1) nach Anspruch 6 oder 7, wobei das Planungsmittel (100) ferner dazu ausgelegt ist, Burst-Profile (110) für die erste Zuweisung (11) von Bursts und für die zweite Zuweisung (12) von Bursts zu erzeugen, wobei die Burst-Profile (110) eines oder mehrere von Folgendem umfassen:
- eine Burst-Länge;
- eine Burst-Wiederholung;
- Ansteuerungsbedingungen für eine Heizung und/oder eine Wärmepumpe, die betriebsmäßig mit dem optischen Burst-Modus-Sender (2) gekoppelt ist;
- Ruhefenster für den optischen Burst-Modus-Sender (2).

9. Vorrichtung (1) nach Anspruch 1, wobei die Vorrichtung (1) in einem optischen Leitungsabschluss (Optical Line Termination, OLT) (4) des optischen Kommunikationsnetzes (3) enthalten ist.

10. Vorrichtung (1) nach Anspruch 1, wobei das optische Kommunikationsnetzwerk (3) ein passives optisches Netzwerk mit Zeit- und Wellenlängenmultiplex ist und wobei der optische Burst-Modus-Sender (2) eine optische Netzwerkeinheit (Optical Network Unit, ONU) (5) ist, die Daten (50) überträgt.

11. Vorrichtung (1) nach Anspruch 9, wobei das Planungsmittel (100) ferner konfiguriert ist, um die Übertragung von Dummy-Daten (51) durch den optischen Burst-Modus-Sender (2) zu planen, wenn der optische Burst-Modus-Sender (2) keine weiteren Daten (50) zu übertragen hat.

12. Vorrichtung (1) nach einem der vorstehenden Ansprüche, wobei die Vorrichtung (1) in dem optischen Burst-Modus-Sender (2) enthalten ist und wobei die Vorrichtung (1) ferner ein Anforderungsmittel (300) umfasst, das konfiguriert ist, um eine Anforderung (30) für die Zuweisung (10) von Bursts zu erzeugen, und ferner konfiguriert ist, um die Anforderung (30) an einen optischen Leitungsabschluss (4) des optischen Kommunikationsnetzes (3) zu übertragen.

13. Verfahren zum Planen einer Zuweisung (10) von Bursts zum Ansteuern eines direkt modulierten optischen Burst-Modus-Lasersenders (2) in einem optischen Kommunikationsnetzwerk (3), wobei das Verfahren die folgenden Schritte umfasst:
- Planen einer ersten Zuweisung (11) von Bursts für den optischen Burst-Modus-Sender (2), wobei der ersten Zuweisung (11) eine erste Burstlänge entspricht;
- Planen einer zweiten Zuweisung (12) von Bursts, die sich von der ersten Zuweisung (11) für den optischen Burst-Modus-Sender (2) unterscheidet, wobei der zweiten Zuweisung (12) eine zweite Burstlänge entspricht; und
**DADURCH GEKENNZEICHNET, DASS** das Verfahren ferner den folgenden Schritt umfasst:
- Planen einer allmählichen Anpassung der Zuweisung (10) von Bursts von der ersten Zuweisung (11) an die zweite Zuweisung (12), indem eine allmähliche Anpassung einer Länge der Bursts von der ersten Burst-Länge an die zweite Burst-Länge geplant wird, wodurch eine Wellenlängendrift, die von dem optischen Burst-Modus-Sender (2) bei der Änderung ausgeht, abgeschwächt wird.

14. Computerprogrammprodukt, das computerausführbare Anweisungen umfasst, um eine Vorrichtung zum Planen einer Zuweisung (10) von Bursts zu veranlassen, einen direkt modulierten optischen Burst-Modus-Lasersender (2) in einem optischen Kommunikationsnetzwerk (3) anzusteuern, um mindestens Folgendes durchzuführen:
- Planen einer ersten Zuweisung (11) von Bursts für den optischen Burst-Modus-Sender (2), wobei der ersten Zuweisung (11) eine erste Burstlänge entspricht;
- Planen einer zweiten Zuweisung (12) von Bursts, die sich von der ersten Zuweisung (11) für den optischen Burst-Modus-Sender (2) unterscheidet, wobei der zweiten Zuweisung (12) eine zweite Burstlänge entspricht; und
**DADURCH GEKENNZEICHNET, DASS** die computerausführbaren Anweisungen die Vorrichtung ferner veranlassen, mindestens Folgendes durchzuführen:
- Planen einer allmählichen Anpassung der Zuweisung (10) von Bursts von der ersten Zuweisung (11) an die zweite Zuweisung (12), indem eine allmähliche Anpassung einer Länge der Bursts von der ersten Burst-Länge an die zweite Burst-Länge geplant wird, wodurch eine Wellenlängendrift, die von dem optischen Burst-Modus-Sender (2) bei der Änderung ausgeht, abgeschwächt wird.

15. Computerlesbares Speichermedium mit computerausführbaren Anweisungen zum Durchführen der folgenden Schritte, wenn das Programm auf einem Computer zum Planen einer Zuweisung (10) von Bursts zum Ansteuern eines direkt modulierten optischen Burst-Modus-Lasersenders (2) in einem optischen Kommunikationsnetzwerk (3) ausgeführt wird:
- Planen einer ersten Zuweisung (11) von Bursts für den optischen Burst-Modus-Sender (2), wobei der ersten Zuweisung (11) eine erste Burstlänge entspricht;
- Planen einer zweiten Zuweisung (12) von Bursts, die sich von der ersten Zuweisung (11) für den optischen Burst-Modus-Sender (2) unterscheidet, wobei der zweiten Zuweisung (12) eine zweite Burstlänge entspricht; und
**DADURCH GEKENNZEICHNET, DASS** die computerausführbaren Anweisungen ferner den folgenden Schritt durchführen:
- Planen einer allmählichen Anpassung der Zuweisung (10) von Bursts von der ersten Zuweisung (11) an die zweite Zuweisung (12), indem eine allmähliche Anpassung einer Länge der Bursts von der ersten Burst-Länge an die zweite Burst-Länge geplant wird, wodurch eine Wellenlängendrift, die von dem optischen Burst-Modus-Sender (2) bei der Änderung ausgeht, abgeschwächt wird.

## Revendications

1. Dispositif (1) comprenant un moyen de programmation (100) configuré pour programmer une attribution (10) de rafales afin de commander un émetteur laser directement modulé en mode de rafale optique (2) dans un réseau de communication optique (3), dans lequel ledit moyen de programmation (100) est en outre configuré pour :
- programmer une première attribution (11) de rafales pour ledit émetteur en mode de rafale optique (2), dans lequel une première longueur de rafale correspond à ladite première attribution (11);
- programmer une seconde attribution (12) de rafales différente de ladite première attribution (11) pour ledit émetteur en mode de rafale optique (2), dans lequel une seconde longueur de rafale correspond à ladite seconde attribution (12); et
**caractérisé en ce que** ledit moyen de programmation (100) est en outre configuré pour :
- programmer un ajustement graduel de ladite attribution (10) de rafales depuis ladite première attribution (11) vers ladite seconde attribution (12) en programmant un ajustement graduel d'une longueur desdites rafales depuis ladite première longueur de rafale vers ladite seconde longueur de rafale, atténuant ainsi une dérive de longueur d'onde provenant dudit émetteur en mode de rafale optique (2) lors dudit changement.

2. Dispositif (1) selon la revendication 1, dans lequel ledit moyen de programmation (100) est configuré pour ajuster ladite attribution (10) de rafales par étapes discrètes depuis ladite première attribution (11) vers ladite seconde attribution (12).

3. Dispositif (1) selon la revendication 1, dans lequel ledit moyen de programmation (100) est configuré pour ajuster de façon monotone ladite attribution (10) de rafales depuis ladite première attribution (11) vers ladite seconde attribution (12).

4. Dispositif (1) selon la revendication 1, dans lequel ledit moyen de programmation (100) est configuré pour ajuster de façon heuristique ladite attribution (10) de rafales depuis ladite première attribution (11) vers ladite seconde attribution (12).

5. Dispositif (1) selon l'une des revendications précédentes, dans lequel ledit dispositif (1) comprend en outre un moyen de configuration (200) couplé de façon opérationnelle avec ledit moyen de programmation (100); et dans lequel ledit moyen de configuration (200) est configuré pour recevoir une capacité cible (21) requise pour ledit réseau de communication optique (3) et une latence maximale (22) pour ledit réseau de communication optique (3).

6. Dispositif (1) selon la revendication 5, dans lequel ledit moyen de configuration (200) est en outre configuré pour un ou plusieurs de ce qui suit :
- une constante de temps thermique (23) dudit émetteur en mode de rafale optique (2);
- un profil d'une attribution en cours (13) de rafales pour ledit émetteur en mode de rafale optique (2);
- un décalage/une dérive de fréquence précaractérisé(e) (24) pour ledit émetteur en mode de rafale optique (2).

7. Dispositif (1) selon la revendication 6, dans lequel ledit moyen de configuration (200) est configuré pour :
- calculer une capacité programmée (25) dans ledit réseau de communication optique (3) obtenue au moment de changer ladite attribution (10) de rafales depuis ladite première attribution (11) vers ladite seconde attribution (12);
- lorsque ladite capacité programmée (25) ne correspond pas à ladite capacité cible (21), calculer une seconde attribution optimisée (14) pour laquelle ladite capacité programmée (25) correspond à ladite capacité cible (21);
et dans lequel ledit moyen de programmation (100) est en outre configuré pour ajuster graduellement l'attribution (10) de rafales depuis ladite première attribution (11) vers la seconde attribution optimisée (14) pour ledit émetteur en mode de rafale optique (2).

8. Dispositif (1) selon la revendication 6 ou 7, dans lequel ledit moyen de programmation (100) est en outre adapté pour produire des profils de rafale (110) pour ladite première attribution (11) de rafales et pour ladite seconde attribution (12) de rafales, dans lequel lesdits profils de rafale (110) comprennent un ou plusieurs de ce qui suit :
- une longueur de rafale;
- une répétition de rafale;
- des conditions de commande pour un(e) chauffage et/ou pompe à chaleur couplé(e) de façon opérationnelle avec ledit émetteur en mode de rafale optique (2);
- des fenêtres calmes pour ledit émetteur en mode de rafale optique (2).

9. Dispositif (1) selon la revendication 1, dans lequel ledit dispositif (1) est compris dans une Terminaison de Ligne Optique (4) dudit réseau de communication optique (3).

10. Dispositif (1) selon la revendication 1, dans lequel ledit réseau de communication optique (3) est un Réseau Optique Passif Multiplexé par Répartition en Temps et en Longueur d'onde et dans lequel ledit émetteur en mode de rafale optique (2) est une Unité de Réseau Optique (5) émettant des données (50).

11. Dispositif (1) selon la revendication 9, dans lequel ledit moyen de programmation (100) est en outre configuré pour programmer une émission de données factices (51) par ledit émetteur en mode de rafale optique (2) lorsque ledit émetteur en mode de rafale optique (2) n'a plus aucune donnée (50) à émettre.

12. Dispositif (1) selon l'une des revendications précédentes, dans lequel ledit dispositif (1) est compris dans ledit émetteur en mode de rafale optique (2) et dans lequel ledit dispositif (1) comprend en outre un moyen de requête (300) configuré pour produire une requête (30) pour ladite attribution (10) de rafales et en outre configuré pour émettre ladite requête (30) vers une Terminaison de Ligne Optique (4) dudit réseau de communication optique (3).

13. Procédé de programmation d'une attribution (10) de rafales destiné à commander un émetteur laser directement modulé en mode de rafale optique (2) dans un réseau de communication optique (3), dans lequel ledit procédé comprend les étapes de :
- programmation d'une première attribution (11) de rafales pour ledit émetteur en mode de rafale optique (2), dans lequel une première longueur de rafale correspond à ladite première attribution (11);
- programmation d'une seconde attribution (12) de rafales différente de ladite première attribution (11) pour ledit émetteur en mode de rafale optique (2), dans lequel une seconde longueur de rafale correspond à ladite seconde attribution (12); et
**caractérisé en ce que** ledit procédé comprend en outre les étapes de :
- programmation d'un ajustement graduel de ladite attribution (10) de rafales depuis ladite première attribution (11) vers ladite seconde attribution (12) en programmant un ajustement graduel d'une longueur desdites rafales depuis ladite première longueur de rafale vers ladite seconde longueur de rafale, atténuant ainsi une dérive de longueur d'onde provenant dudit émetteur en mode de rafale optique (2) lors dudit changement.

14. Produit de programme informatique comprenant des instructions exécutables par ordinateur pour amener un dispositif destiné à programmer une attribution (10) de rafales à commander un émetteur laser directement modulé en mode de rafale optique (2) dans un réseau de communication optique (3) à réaliser au moins ce qui suit :
- programmer une première attribution (11) de rafales pour ledit émetteur en mode de rafale optique (2), dans lequel une première longueur de rafale correspond à ladite première attribution (11);
- programmer une seconde attribution (12) de rafales différente de ladite première attribution (11) pour ledit émetteur en mode de rafale optique (2), dans lequel une seconde longueur de rafale correspond à ladite seconde attribution (12); et
**caractérisé en ce que** lesdites instructions exécutables par ordinateur amènent en outre ledit dispositif à réaliser en outre au moins ce qui suit :
- programmer un ajustement graduel de ladite attribution (10) de rafales depuis ladite première attribution (11) vers ladite seconde attribution (12) en programmant un ajustement graduel d'une longueur desdites rafales depuis ladite première longueur de rafale vers ladite seconde longueur de rafale, atténuant ainsi une dérive de longueur d'onde provenant dudit émetteur en mode de rafale optique (2) lors dudit changement.

15. Support de stockage lisible par un ordinateur comprenant des instructions exécutables par ordinateur pour réaliser les étapes suivantes lorsque le programme est mis en œuvre sur un ordinateur destiné à programmer une attribution (10) de rafales afin de commander un émetteur laser directement modulé en mode de rafale optique (2) dans un réseau de communication optique (3) :
- programmation d'une première attribution (11) de rafales pour ledit émetteur en mode de rafale optique (2), dans lequel une première longueur de rafale correspond à ladite première attribution (11);
- programmation d'une seconde attribution (12) de rafales différente de ladite première attribution (11) pour ledit émetteur en mode de rafale optique (2), dans lequel une seconde longueur de rafale correspond à ladite seconde attribution (12); et
**caractérisé en ce que** lesdites instructions exécutables par ordinateur réalisent en outre l'étape suivante :
- programmation d'un ajustement graduel de ladite attribution (10) de rafales depuis ladite première attribution (11) vers ladite seconde attribution (12) en programmant un ajustement graduel d'une longueur desdites rafales depuis ladite première longueur de rafale vers ladite seconde longueur de rafale, atténuant ainsi une dérive de longueur d'onde provenant dudit émetteur en mode de rafale optique (2) lors dudit changement.
